# EUROPEAN PATENT SPECIFICATION

(11) **EP 4 474 902 B1**
(45) Date of publication and mention of the grant of the patent: **19.08.2026**
(21) Application number: 22926755.4
(22) Date of filing: 12.10.2022
(51) Int. Cl.: G03B 21/00, G02B 26/08, G02B 26/10

(54) **PROJECTION DEVICE AND METHOD**
PROJEKTIONSVORRICHTUNG UND -VERFAHREN
DISPOSITIF ET PROCÉDÉ DE PROJECTION

(30) Priority: 21.02.2022 CN 202210157804
(43) Date of publication of application: 11.12.2024
(73) Proprietor: Huawei Technologies Co., Ltd., Shenzhen, Guangdong 518129 (CN)
(72) Inventor: LUO, Kun, Shenzhen, Guangdong 518129 (CN); XIONG, Wei, Shenzhen, Guangdong 518129 (CN); ZHAO, Pengfei, Shenzhen, Guangdong 518129 (CN)
(74) Representative: Isarpatent
(86) International application number: PCT/CN2022/124862
(87) International publication number: WO 2023/155450

(56) References cited:
- WO-A1-2008/090801
- CN-A- 1 710 459
- CN-A- 101 295 123
- CN-A- 101 295 123
- CN-A- 106 125 479
- CN-A- 108 398 779
- CN-A- 110 347 008
- CN-A- 112 015 035
- ES-T3- 2 200 852
- US-A1- 2007 091 037
- US-A1- 2019 243 134
- US-A1- 2020 241 399
- US-B1- 6 433 907

## Description

This application claims priority to Chinese Patent Application No. 202210157804.7, filed with the China National Intellectual Property Administration on February 21, 2022 and entitled "PROJECTION APPARATUS AND METHOD".

### TECHNICAL FIELD

This application relates to the field of projection display technologies, and in particular, to a projection apparatus and method.

### BACKGROUND

With continuous development of projection technologies and application of projection apparatuses in more fields, requirements of users for the projection technologies are also increasing.

US 2007/091037 A1 disclose a conventional technology mobile display that reduces power consumption by tracking viewers' head movements and steering a narrowly-collimated light beam toward them. It uses a microlens array (mechanically or electronically steered), optional m i cro-m i rror collimation, and sub-pixel addressing to focus and direct light only where needed, improving efficiency, privacy, and battery life.

To adapt to more application scenarios, for example, application in the field of artificial intelligence (Artificial Intelligence, AI) and the field of virtual reality (Virtual Reality, VR) technologies, performance of the projection apparatus needs to be improved in terms of optimizing a size, increasing resolution, and the like.

In a conventional technology, to increase resolution of a projected image, a large optical module is generally used in the projection apparatus, resulting in a large size of the projection apparatus. In another conventional technology, to achieve an effect of reducing a size of the projection apparatus, resolution is sacrificed to a specific extent, resulting in a problem of low resolution of a projected image.

### SUMMARY

This application provides a projection apparatus and method, to enable a small-sized projection apparatus to provide a higher-resolution projected image, and achieve an objective of optimizing a size and increasing resolution.

According to a first aspect, an embodiment of this application provides a projection apparatus, including: a pixel array disposed on a substrate, where the pixel array has a light-emitting feature; a cantilever beam disposed on the substrate and configured to fasten a micro-electro-mechanical system (Micro-Electro-Mechanical System, MEMS) lens, where the cantilever beam is disposed outside the pixel array, the MEMS lens is configured to scan the pixel array, and the cantilever beam and the MEMS lens form a MEMS lens scanner; and a driver connected to the pixel array and the MEMS lens scanner and configured to drive the pixel array having a light-emitting feature to perform color display, where the driver is further configured to control the MEMS lens to rotate on the cantilever beam and scan the color-display pixel array, to obtain a projected image.

In some examples, the pixel array includes a plurality of pixel blocks. For example, the pixel array may be a rectangular pixel array including M*N pixel blocks with M pixel blocks in each row and N pixel blocks in each column. Each pixel block includes three subpixels: red, green, and blue subpixels. The subpixels have a light-emitting feature. M≥1, N≥1, and M*N>1. In some scenarios in which a circular pixel array, a trapezoidal pixel array, or another pixel array is required, the pixel array may also be set to another shape, and is not limited to a rectangle.

In some examples, an optical element such as a lens may be disposed on an optical path for projection imaging of the projection apparatus. For example, an optical element such as a lens is disposed between the pixel array and the projected image obtained through projection, to improve an imaging effect of the projected image.

The pixel array is disposed on the substrate of the projection apparatus, and the pixel array may display different colors under different drive signals. For example, the pixel array includes M*N pixel blocks, where M≥1, N≥1, and M*N>1. Each pixel block includes three primary colors (RGB): red (red), green (green), and blue (blue). Different colors are displayed under different drive signals of the driver. For example, different electrical signals are used to drive the pixel blocks to emit light and display different colors. The MEMS lens that rotates on the cantilever beam scans the color-display pixel array back and forth along a track at different angles under control of the driver, to obtain scanned image blocks. The MEMS lens scans the pixel array for a plurality of times, to obtain image blocks at different positions of the projected image. The image blocks may be combined to form a frame of a complete projected image.

In a possible implementation, the driver is specifically configured to: in a same timing, control the MEMS lens scanner to perform scanning, and drive the pixel array to perform color display.

The projection apparatus may obtain, based on data processing on an image that needs to be projected, a drive signal that can be used to drive the pixel array to perform color display and control the MEMS lens scanner to rotate along a track. In this way, in a same timing, based on a calculation result, the pixel array is driven to perform color display, and the MEMS lens is controlled to rotate, to further obtain a plurality of image blocks that can be combined into a complete projected image. In this method of combining a plurality of high-resolution image blocks to obtain a projected image, a large-sized optical module and component are not required, and a driving speed or a control speed of the driver does not need to be constantly increased to improve resolution. Based on a requirement of a data processing result, the pixel array having a light-emitting feature is driven and the MEMS lens scanner that performs multi-angle scanning is controlled, so that an effect of projecting a high-resolution projected image by a small-sized projection apparatus can be achieved.

In a possible implementation, the MEMS lens scanner is a one-dimensional lens scanner, and the driver is specifically configured to control the MEMS lens to rotate along the cantilever beam within a first angle and scan the color-display pixel array, to obtain first image blocks obtained through scanning by the MEMS lens at a group of sampling time points, where the first image blocks at the group of sampling points form the projected image.

For example, the MEMS lens scanner is a one-dimensional lens scanner, and the one-dimensional lens scanner may perform rapid transverse scanning within the first angle, for example, within ±50 degrees. The driver controls the MEMS lens to rotate along the cantilever beam within ±50 degrees, to correspondingly obtain a plurality of image blocks, denoted as the first image blocks, at the group of sampling time points. The projection apparatus may determine the group of sampling time points on a selection basis that the plurality of first image blocks can be combined to obtain a frame of projected image. In other words, the plurality of first image blocks obtained at the sampling time points can be combined to obtain at least one frame of projected image. Alternatively, the group of sampling time points may be determined based on first image blocks combined to obtain a plurality of frames of projected images. The first angle may be determined based on an actual requirement. For example, the first angle may alternatively be set to ±90 degrees.

In a possible implementation, the MEMS lens scanner is a two-dimensional lens scanner, and the driver is specifically configured to control: a MEMS lens in one dimension to rotate along the cantilever beam within a second angle and scan the color-display pixel array, to obtain second image blocks obtained through scanning by the MEMS lens at a group of sampling time points; and control a MEMS lens in the other dimension to rotate in a direction perpendicular to the cantilever beam within a third angle and scan the color-display pixel array, to obtain third image blocks obtained through scanning by the MEMS lens at another group of sampling time points, where the second image blocks and the third image blocks form the projected image.

For example, the MEMS lens scanner is a two-dimensional lens scanner, and the two-dimensional lens scanner may perform scanning in two directions. Based on different scanning modes, two axes may be generally classified into a fast axis and a slow axis. The lens scanner in one dimension may perform rapid transverse scanning along the cantilever beam within the second angle, for example, within ±50 degrees, to obtain a plurality of second image blocks at the group of sampling time points. The MEMS lens in the other dimension may perform slow vertical scanning in a direction perpendicular to the cantilever beam within ±10 degrees, to obtain a plurality of third image blocks at the another group of sampling time points. Similarly, the two groups of sampling time points are determined on a selection basis that the obtained plurality of second image blocks and third image blocks can be combined to obtain a frame of projected image. In other words, the plurality of second image blocks and third image blocks obtained at the two groups of sampling time points can be combined to obtain at least one frame of projected image. Alternatively, the sampling time points may be determined based on second image blocks and third image blocks that are combined to obtain multiple frames of projected images. The second angle may alternatively be determined based on an actual requirement, and is not limited to ±10 degrees.

In some examples, the driver may drive the MEMS lens scanner through logic control, to control the MEMS lens to rotate, or may control, in another driving manner, the MEMS lens to rotate and scan the color-display pixel array, to obtain a scanned image.

In a possible implementation, the pixel array includes a plurality of pixel blocks, and the pixel block includes: red, green, and blue subpixels that are disposed in parallel on a horizontal plane and that have a light-emitting feature, or red, green, and blue subpixels that are disposed in a stacked manner in a vertical direction and that have a light-emitting feature.

One pixel block may include three subpixels: red, green, and blue subpixels that are disposed in parallel on a horizontal plane. Alternatively, one pixel block includes three subpixels: red, green, and blue subpixels that are disposed in a stacked manner in a vertical direction. In other words, the three subpixels disposed in parallel on the horizontal plane may be disposed horizontally like subpixels disposed horizontally on a liquid crystal display screen. The three subpixels that are disposed in the stacked manner in the vertical direction are vertically arranged in a depth direction. From a perspective of a top view direction, the three subpixels overlap each other. A sequence of red, green, and blue may be adjusted as required, and is not limited to the sequence of red, green, and blue. In addition, a proper distance is maintained between the three subpixels: red, green, and blue subpixels. For example, the red, green, and blue subpixels are arranged based on a general pixel arrangement distance of the liquid crystal display screen.

In a possible implementation, an optical structure is disposed on a surface of the pixel array, where the optical structure is configured to calibrate emitted light of the pixel array to emitted light featured by a narrow beam and high collimation.

The optical structure may be a Bragg reflector (Distributed Bragg Reflector, DBR) structure, a micro lens (Micro lens) structure, or the like. These optical structures can reduce a light emitting angle of the pixel array as much as possible, so that a beam emitted by the pixel array is featured by a narrow beam and high collimation.

In a possible implementation, the pixel array is a micro light emitting diode (Micro Light Emitting Diode, Micro LED) display array or a micro organic light emitting diode (Micro Organic Light Emitting Diode, Micro OLED) display array.

A micro LED technology is an LED miniaturization and matrix technology, and means that in a high-density and small-sized LED array integrated on a chip, each subpixel can be independently driven. A micro OLED technology is an organic light emitting diode miniaturization and matrix technology, and each subpixel may also be independently driven. Therefore, the technologies are applicable to the projection apparatus provided in this application. Independently driven by the driver, each subpixel performs color display based on a drive signal required by a digital processing result, so that each subpixel is scanned to obtain different image blocks of an image that needs to be projected, to further form a frame of a complete projected image.

In a possible implementation, a scanning track of the MEMS lens is that a start end of the scanning track does not extend an utmost edge of the pixel array scanned by the MEMS lens.

The scanning track of the MEMS lens may be in a plurality of forms such as up to down and left to right, provided that a plurality of image blocks can be obtained through scanning on the track of the MEMS lens to form a frame of a complete projected image. However, if the scanning track greatly extends the subpixel, a drive waste is caused, and imaging time is prolonged. Therefore, the scanning track may be set to a shortest track on a scanning path that can ensure imaging. In other words, a scanning start end does not extend a subpixel at the utmost edge of the pixel array. To further reduce a possibility that the scanning track greatly extends the subpixel, a termination end of the scanning track does not extend the utmost edge of the pixel array scanned by the MEMS lens.

According to a second aspect, an embodiment of this application provides a projection method, including: driving a pixel array having a light-emitting feature to perform color display; and controlling a micro-electro-mechanical system MEMS lens to rotate on a cantilever beam and scan the color-display pixel array, to obtain a projected image, where the cantilever beam is disposed outside the pixel array and is configured to fasten the MEMS lens, the MEMS lens is configured to scan the pixel array, and the cantilever beam and the MEMS lens form a MEMS lens scanner.

In a possible implementation, the MEMS lens scanner is a one-dimensional lens scanner. The controlling a micro-electro-mechanical system MEMS lens to rotate on a cantilever beam and scan the color-display pixel array, to obtain a projected image includes: controlling the one-dimensional MEMS lens to rotate along the cantilever beam within a first angle and scan the color-display pixel array, to obtain first image blocks obtained through scanning by the MEMS lens at a group of sampling time points, where the first image blocks at the group of sampling points form the projected image.

In a possible implementation, the MEMS lens scanner is a two-dimensional lens scanner. The controlling a micro-electro-mechanical system MEMS lens to rotate on a cantilever beam and scan the color-display pixel array, to obtain a projected image includes: controlling a MEMS lens in one dimension to rotate along the cantilever beam within a second angle and scan the color-display pixel array, to obtain second image blocks obtained through scanning by the MEMS lens at a group of sampling time points; and controlling a MEMS lens in the other dimension to rotate in a direction perpendicular to the cantilever beam within a third angle and scan the color-display pixel array, to obtain third image blocks obtained through scanning by the MEMS lens at another group of sampling time points, where the second image blocks and the third image blocks form the projected image.

In a possible implementation, the driving a pixel array having a light-emitting feature to perform color display; and controlling a micro-electro-mechanical system MEMS lens to rotate on a cantilever beam to scan the color-display pixel array, to obtain a projected image includes: in a same timing, driving the pixel array having a light-emitting feature to perform color display, and controlling the MEMS lens to rotate on the cantilever beam and scan the color-display pixel array, to obtain the projected image.

In a possible implementation, a scanning track of the MEMS lens is that a start end of the scanning track does not extend an utmost edge of the pixel array scanned by the MEMS lens.

In this method, the MEMS lens scanner scans the pixel array having a light-emitting feature at different angles, to obtain the projected image. The projected image obtained by using this method has high resolution and a good picture effect. In addition, both the MEMS lens scanner and the pixel array have a small size and are disposed in the projection apparatus. This can support projection of a small-sized projection apparatus, and achieve an objective of optimizing a size of the projection apparatus and increasing resolution of the projection apparatus.

### BRIEF DESCRIPTION OF DRAWINGS

To describe the technical solutions in embodiments of this application more clearly, the following briefly introduces the accompanying drawings required for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a top view of a projection apparatus according to an embodiment of this application;
FIG. 2 is a diagram of a structure of scanning an image by a projection apparatus;
FIG. 3 is a diagram of a moving track of a MEMS lens;
FIG. 4 is a diagram of scanning display of a projection apparatus according to an embodiment of this application;
FIG. 5 is a diagram of arrangement and distribution in a pixel block; and
FIG. 6 is a flowchart of a projection method according to an embodiment of this application.

### DESCRIPTION OF EMBODIMENTS

The following clearly and completely describes the technical solutions in embodiments of this application with reference to the accompanying drawings in embodiments of this application. The scope of the invention is solely defined by the appended claims. It is clear that the described embodiments are some but not all of embodiments of this application. All other embodiments obtained by a person of ordinary skill in the art based on embodiments of this application without creative efforts might fall within the scope of the invention without departing from the scope of the claims.

The term "and/or" in this specification describes only an association relationship for describing associated objects and represents that three relationships may exist. For example, A and/or B may represent the following three cases: Only A exists, both A and B exist, and only B exists.

In the descriptions of embodiments of this application, unless otherwise clearly specified and limited, the terms "first" and "second" are used only for description and cannot be understood as an indication or implication of relative importance. Unless otherwise specified or stated, the term "a plurality of" means two or more. The term "connection", "fastening", or the like should be understood in a broad sense. For example, "connection" may be a fixed connection, or may be a detachable connection, an integral connection, or an electrical connection; or may be a direct connection, or may be an indirect connection performed by using an intermediate medium. A person of ordinary skill in the art may understand specific meanings of the terms in this application based on specific cases.

In the descriptions of this specification, it should be understood that orientation words such as "above" and "below" described in embodiments of this application are described from the perspective shown in the accompanying drawings, and should not be understood as a limitation on embodiments of this application. In addition, in the context, it should be further understood that when it is mentioned that an element is connected "above" or "below" another element, the element can be directly connected "above" or "below" the another element, or may be indirectly connected "above" or "below" the another element by using an intermediate element.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Specifically, the use of words such as "example" or "for example" is intended to present a related concept in a specific manner.

In the descriptions of embodiments of this application, unless otherwise stated, "a plurality of" means two or more than two. The following describes this application in detail with reference to the accompanying drawings and embodiments. It should be understood that the specific embodiments described herein are merely used to explain this application but are not intended to limit this application.

A projection apparatus provided in embodiments of this application may include an engineering projector, a cinema projector, a laser television, a home theater, an education projector, a portable micro projector, and the like, and may be deployed in different scenarios for use, for example, an indoor or outdoor scenario and a handheld or vehicle-mounted scenario; may be deployed on the water (for example, on a ship); or may be deployed in the air (for example, on an airplane and a satellite). With increasing maturity of a conventional projection technology, the projection apparatus is installed in different devices, and is applicable to various application scenarios. For example, the projection apparatus may be widely applied to the AI field and the VR field, or is applicable to a projection device in telemedicine (telemedicine) and a projection device in a smart grid (smart grid), a projection device in transportation safety (transportation safety), a projection device in a smart city (smart city), a projection device in a smart home (smart home), and the like. In addition, the projection display apparatus may be placed on a horizontal plane, or may be hung on a roof by using a davit, or may be installed in another device that needs to perform projection for use. This is not limited in this application.

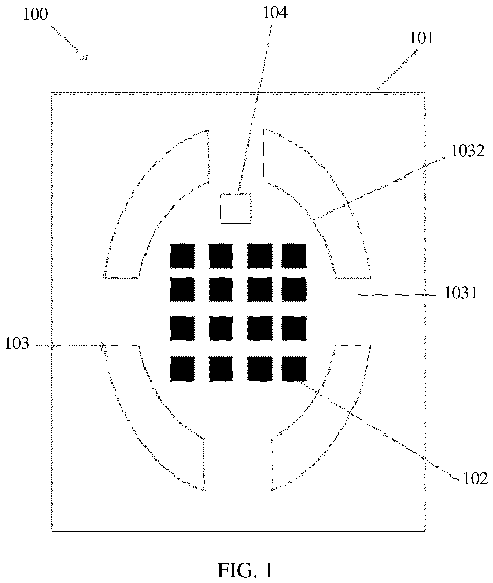

An embodiment of this application provides a projection apparatus. FIG. 1 is a top view of the projection apparatus according to this embodiment of this application. As shown in FIG. 1, the projection apparatus 100 includes: a substrate 101, a pixel array 102, a MEMS lens scanner 103, and a driver 104. The MEMS lens scanner 103 includes a cantilever beam 1031 and a MEMS lens 1032.

In some examples, an optical element such as a lens may be disposed on an optical path for projection imaging of the projection apparatus 100. For example, an optical element such as a lens is disposed between the pixel array 102 and a projected image obtained through projection, to improve an imaging effect of the projected image.

The projection apparatus 100 includes the pixel array 102 disposed on the substrate 101, and the pixel array 102 has a light-emitting feature.

In some examples, the pixel array 102 may be a rectangular array including a plurality of pixel blocks, for example, including M pixel blocks 1021 in each row and N pixel blocks in each column, where M≥1, N≥1, and M*N> 1. The pixel block includes subpixels having a light-emitting feature. In this application, an example in which the pixel array is a rectangular array is used for description. The pixel array may be set to different shapes based on different application scenarios, and the example of the rectangular array is not used as a limitation.

For example, each pixel block includes subpixels, which are generally subpixels with three primary colors, to be specific, red, green, and blue subpixels. However, in a scenario that requires higher resolution, subpixels with more primary colors may be set.

The cantilever beam 1031 disposed on the substrate 101 is configured to fasten the MEMS lens 1032. The cantilever beam 1031 is disposed outside the pixel array 102. The MEMS lens 1032 is configured to scan the pixel array 102.

As shown in FIG. 1, the cantilever beam 1031 and the MEMS lens 1032 form the MEMS lens scanner 103.

The driver 104 connected to the pixel array 102 and the MEMS lens 1032 is configured to drive the pixel array 102 having a light-emitting feature to perform color display.

The driver 104 is further configured to control the MEMS lens 1032 to rotate on the cantilever beam 1031 and scan the color-display pixel array 102, to obtain a projected image.

A position of the driver 104 in FIG. 1 is merely an example. The position of the driver may be adjusted based on an actual requirement, and is not limited in this example. The driver only needs to be connected to the pixel array 102 and the MEMS lens scanner 103, and may transmit a drive signal to the pixel array 102 and the MEMS lens scanner 103, to drive the pixel array 102 to perform color display and control the MEMS lens scanner 103 to perform scanning, to obtain the projected image.

In some examples, the driver 104 may be a driver integrating a plurality of driving functions, for example, a driving function of an electrical signal for driving the pixel array to emit light and display, and a driving function of logically controlling a lens of the MEMS lens scanner to rotate to perform scanning and imaging. The driver 104 provided in this application may be a combination of a plurality of drivers or may integrate a plurality of functions, provided that the driver 104 can drive the pixel array to perform color display and can control the lens of the MEMS lens scanner to rotate to perform scanning and imaging. This is not limited to a specific driving manner.

In some conventional projection display technologies, because of features of technologies such as a liquid crystal on silicon (liquid crystal on silicon, LCOS) technology, and a digital light processing (Digital Light Processing, DLP) technology, projection imaging of the projection display technologies requires complex optical elements and systems such as backlight, a light source shaping system, and a prism. In this case, the projection apparatus has a large size, and cannot adapt to an operation scenario requiring a small size. In this application, the subpixels having a light-emitting feature are arranged as the pixel block, and the pixel array 102 including the pixel blocks is disposed on the substrate 101. A complex system is not required, and three primary colors (RGB) of red (red), green (green), and blue (blue) can be used as a display source. The MEMS lens 1032 that rotates around the cantilever beam 1031 scans, back and forth along a fixed track, the pixel array 102 that is driven by the same drive signal to perform color display, to respectively obtain a plurality of image blocks. The plurality of image blocks may form a frame of a complete projected image. This achieves an effect of scanning and imaging of a small-sized projection apparatus.

In current projection display technologies, there are some projection methods in which a laser projection display technology and reflected light of a MEMS lens scanner are used for imaging. However, in the method, resolution is low when a size of a projection apparatus is small, or a size of a required component and a size of a required optical module are correspondingly increased after the resolution is increased. In addition, a driver needs to perform driving at a high speed to ensure imaging, and use of the small-sized projection apparatus cannot be ensured. According to the projection apparatus in this application, to resolve the problem, the small-sized and high-resolution projection apparatus 100 applicable to projection is provided. The pixel array is disposed on the substrate 101 of the projection apparatus 100. The pixel array may display different colors under driving of the driver 104. In addition, driven by the driver 104, the MEMS lens 1032 that rotates on the cantilever beam 1031 scans the pixel array back and forth along a track at different angles, to obtain scanned image blocks. The image blocks form a frame of a complete projected image. The projection apparatus 100 only needs to obtain, based on data processing on an image that needs to be projected, a drive signal that can be used to drive the pixel array 102 to perform color display and an angle at which the MEMS lens scanner 103 is driven to rotate and perform scanning along the track. In this way, in a same timing, based on a requirement, the pixel array 102 is driven to perform color display, and the MEMS lens 1032 is controlled to rotate. Therefore, image blocks of the projected image are obtained. The image blocks are combined, and the projection device 100 can obtain a high-resolution projected image without a need of a large-sized optical module or component and without requiring the driver to perform driving at a high speed.

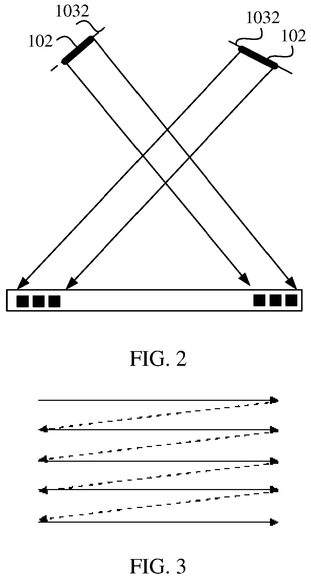

FIG. 2 is a diagram of a structure of scanning an image by the projection apparatus. As shown in FIG. 2, the projection apparatus 100 provided in this application controls the MEMS lens 1032 that rotates around the cantilever beam 1031, to enable the MEMS lens 1032 to rotate at a specific angle, in other words, move along a specific track, and scan the pixel array 102. The pixel array 102 is disposed at a front end of the MEMS lens 1032 and between the MEMS lens 1032 and a projection imaging position. The pixel array 102 may be attached to the MEMS lens 1032, as shown in FIG. 2, or may be fastened between the MEMS lens 1032 and the projection imaging position, provided that color display of the pixel array 102 can be performed to enable imaging to be performed at the projection imaging position with different angles at which the MEMS lens 1032 rotates. A specific position shown in FIG. 2 is not used as a limitation.

A moving track of the MEMS lens 1032 may be determined based on an image that needs to be imaged or the pixel array 102. For example, the moving track may be determined based on that a complete image that needs to be imaged can be obtained or that the pixel array 102 can be completely covered.

FIG. 3 is a diagram of the moving track of the MEMS lens. As shown in FIG. 3, if the MEMS lens 1032 rotates at the angle shown in FIG. 2 and performs scanning, to be specific, rotates from a scanning position of the MEMS lens 1032 identified by a solid line in FIG. 2 to another scanning position of the MEMS lens 1032 identified by a dashed line, and then rotates from the position of the MEMS lens 1032 identified by the dashed line to the scanning position of the MEMS lens 1032 identified by the solid line, to repeatedly perform rotation and scanning, a scanning track formed is the moving track shown in FIG. 3. The MEMS lens 1032 repeatedly scans the pixel array 102 along the moving track, and projects different image blocks at different projection positions. The image blocks may be combined to obtain a frame of a complete projected image.

For example, in a process of using the projection apparatus 100, the projected image needs to be displayed. In this case, as shown in FIG. 3, the MEMS lens 1032 repeatedly scans, along a fixed scanning track, the pixel array 102 covered by the scanning track. FIG. 3 is merely used as an example, and the moving track of the MEMS lens 1032 is not limited to the scanning track.

It should be noted that the MEMS lens scanner 103 may be classified into a one-dimensional lens scanner and a two-dimensional lens scanner.

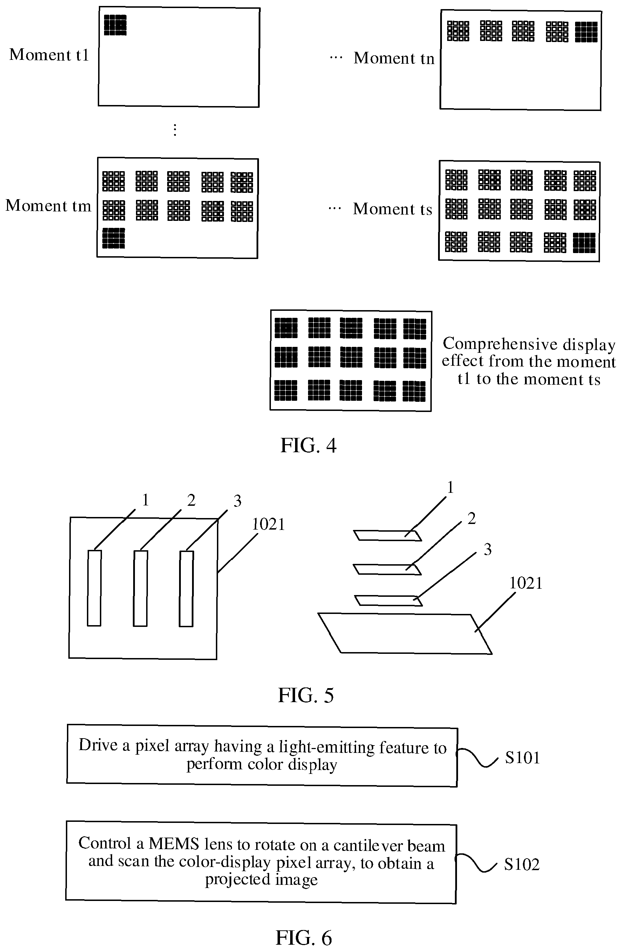

FIG. 4 is a diagram of scanning display of a projection apparatus according to an embodiment of this application. As shown in FIG. 4, the projection apparatus 100 obtains different image blocks at a group of sampling time points. Each image block corresponds to a part of a complete projected image. The image blocks may be combined to present a frame of the complete projected image.

In some examples, a MEMS lens scanner 103 is a one-dimensional lens scanner. A driver 104 is specifically configured to control a MEMS lens 1032 to rotate along a cantilever beam 1031 within a first angle and scan a color-display pixel array 102, to obtain first image blocks obtained through scanning by the MEMS lens 1032 at a group of sampling time points. The first image blocks at the group of sampling points form the projected image.

For example, the MEMS lens scanner 103 is a one-dimensional lens scanner, and the one-dimensional lens scanner may perform rapid transverse scanning. The first angle may be 50 degrees. The driver 104 controls the MEMS lens 1032 to rotate along the cantilever beam 1031 within ±50 degrees. As shown in FIG. 4, a plurality of first image blocks may be respectively obtained at groups of sampling time points from t1 to tn and from tm to ts. A complete frame including all the first image blocks corresponding to the group of sampling time points is a frame of projected image that needs to be projected. The first angle herein may alternatively be set to 90 degrees, 30 degrees, or the like. This is not limited in the foregoing example.

Alternatively, a MEMS lens scanner 103 is a two-dimensional lens scanner, and the two-dimensional lens scanner may perform scanning in two directions. Based on different scanning modes, two axes may be generally classified into a fast axis and a slow axis. For example, it may be determined that the fast axis controls a MEMS lens 1032 in one dimension to rotate along a cantilever beam 1031, and the slow axis controls a MEMS lens 1032 in the other dimension to rotate in a direction perpendicular to the cantilever beam 1031.

A driver 104 is specifically configured to: control the MEMS lens 1032 in one dimension to rotate along the cantilever beam 1031 within a second angle and scan a color-display pixel array, to obtain second image blocks obtained through scanning by the MEMS lens 1032 at a group of sampling time points; and control the MEMS lens 1032 in the other dimension to rotate in the direction perpendicular to the cantilever beam 1031 within a third angle and scan the color-display pixel array 102, to obtain third image blocks obtained through scanning by the MEMS lens 1032 at another group of sampling time points. The second image blocks and the third image blocks form the projected image.

In some examples, the driver 104 controls the MEMS lens 1032 in one dimension to rotate along the cantilever beam 1031 within ±50 degrees and scan the color-display pixel array, to obtain the second image blocks, for example, image blocks in a first row in FIG. 4, obtained through scanning by the MEMS lens 1032 at the group of sampling time points from t1 to tn shown in FIG. 4. The driver 104 controls the MEMS lens 1032 in the other dimension to rotate in the direction perpendicular to the cantilever beam 1031 within ±10 degrees and scan the color-display pixel array, to obtain the third image blocks obtained through scanning by the MEMS lens 1032 at the group of sampling time points from tm to ts shown in FIG. 4. When scanning in both directions is completed, to be specific, all the second image blocks and the third image blocks that correspond to the two groups of sampling time points are obtained, a frame of a complete projected image that needs to be projected may be formed. Time for forming a frame of a complete projected image is less than time for human eyes to distinguish image frame switching. Therefore, a user can normally use the projection apparatus to project and view a picture or a video, and user experience is not affected by combining the plurality of image blocks to obtain the projected image.

The second angle and the third angle in this example may alternatively be determined based on an actual scanning requirement, and are not limited to the foregoing example.

The projected image obtained based on the foregoing manner may provide a plurality of pieces of resolution based on an actual requirement. When a requirement for resolution of the projected image is high, the projected image can achieve high resolution. Both the one-dimensional MEMS lens and the two-dimensional MEMS lens have an adaptive application scenario. For example, in some AI or VR scenarios, the projection apparatus needs to be in a small size for adaptation. In this case, the projection apparatus may be configured with only the one-dimensional MEMS lens. If the projection apparatus needs to provide a 480*640 projected image, and the pixel array is a 1*480 array, longitudinal resolution may be provided by color display of a longitudinal pixel array during each time of scanning, and horizontal resolution needs to be obtained by requiring the one-dimensional MEMS lens scanner to scan 640 real pixels to support obtaining the projected image. Although this scanning manner requires to scan and sample more image blocks horizontally, a configuration of the projection apparatus is simpler, the resolution can also meet the requirement, and the scanning manner is applicable to a scenario with a low configuration requirement. A requirement for the resolution of the projected image and an arrangement manner of subpixels of the pixel array may be adjusted based on an actual requirement, and are not limited in this example.

The two-dimensional MEMS lens scanner scans a same image to obtain projected images with same resolution. The scanning may be performed in two directions at the same time. Although a configuration is slightly more complex than that of the one-dimensional MEMS lens scanner, the projected image can be obtained faster, and the two-dimensional MEMS lens scanner is applicable to a scenario with a higher requirement for an imaging speed.

In some examples, the driver 104 is specifically configured to: in a same timing, control the MEMS lens scanner 103 to perform scanning, and drive the pixel array 102 to perform color display.

After data processing, information about an image that needs to be projected may be converted into two parts of drive signals. The driver 104 respectively outputs the two parts of drive signals. For example, a logic control signal is used to control the MEMS lens 1032 of the MEMS lens scanner 103, and an electrical signal is used to drive the pixel array 102 to perform color display. The two parts of drive signals need to ensure that, in the same timing, the MEMS lens scanner 103 is controlled and the pixel array 102 is driven. Ensuring real-time performance can ensure that color display of the pixel array 102 is consistent with scanning driving of the MEMS lens scanner 103, so that the projected image is displayed more accurately and a display effect is better.

Further, the pixel array 102 includes a plurality of pixel blocks 1021. FIG. 5 is a diagram of arrangement and distribution in the pixel block. As shown in FIG. 5, the pixel block 1021 includes: red, green, and blue subpixels that are disposed in parallel on a horizontal plane and that have a light-emitting feature, or red, green, and blue subpixels that are disposed in a stacked manner in a vertical direction and that have a light-emitting feature.

The red, green, and blue subpixels in the pixel block 1021 are respectively denoted as a red subpixel 1, a green subpixel 2, and a blue subpixel 3, and the three subpixels may be arranged in different forms. As shown in the left figure in FIG. 5, one pixel block may include three subpixels: red, green, and blue subpixels that are disposed in parallel on a horizontal plane. Alternatively, as shown in the right figure in FIG. 5, one pixel block includes three subpixels: red, green, and blue subpixels that are disposed in a stacked manner in a vertical direction.

For example, the three subpixels disposed in parallel on the horizontal plane may be disposed horizontally like subpixels disposed horizontally on a liquid crystal display screen. The three subpixels that are disposed in the stacked manner in the vertical direction are vertically arranged in a depth direction. From a perspective of a top view direction, the three subpixels overlap each other. A sequence of red, green, and blue may be adjusted as required, and is not limited to a sequence marked in the figure.

A proper distance is maintained between the three subpixels: red, green, and blue subpixels. For example, the red, green, and blue subpixels are arranged based on a general pixel arrangement distance of the liquid crystal display screen.

In some examples, the pixel array 102 is a micro LED array or a micro OLED array.

A micro LED technology is an LED miniaturization and matrix technology, and means that in a high-density and small-sized LED array integrated on a chip, each subpixel can be independently driven. A micro OLED technology is an organic light emitting diode miniaturization and matrix technology, and each subpixel may also be independently driven. Therefore, the technologies are applicable to the projection apparatus provided in this application. Independently driven by the driver, each subpixel performs color display based on a drive signal required by a digital processing result, so that each subpixel is scanned to obtain different image blocks of an image that needs to be projected, to further form a frame of a complete projected image.

In some examples, the projection apparatus further includes an optical structure disposed on a surface of the pixel array 102. The optical structure is configured to calibrate emitted light of the pixel array to emitted light featured by a narrow beam and high collimation. The optical structure may be a DBR structure, a micro lens structure, or the like. These optical structures may reduce a light emitting angle of the micro LED pixel array or the micro OLED pixel array as much as possible, so that a beam emitted by the micro LED pixel array or the micro OLED pixel array is featured by a narrow beam and high collimation.

In some examples, a scanning track of the MEMS lens is that a start end of the scanning track does not extend an utmost edge of the pixel array scanned by the MEMS lens. As shown in the foregoing example, the scanning track of the MEMS lens may be in a plurality of forms such as up to down and left to right, provided that a plurality of image blocks can be obtained through scanning on the track of the MEMS lens to form a frame of a complete projected image. However, if the scanning track greatly extends the subpixel, a drive waste is caused, and imaging time is prolonged. Therefore, the scanning track may be set to a shortest track on a scanning path that can ensure imaging. In other words, a scanning start end does not extend a subpixel at the utmost edge of the pixel array. To further reduce a possibility that the scanning track greatly extends the subpixel, a termination end of the scanning track does not extend the subpixel at the utmost edge of the pixel array scanned by the MEMS lens.

In a possible manner, the pixel array in the projection apparatus provided in this embodiment of this application may be prepared on the MEMS lens. For example, the micro LED array or the micro OLED array may be prepared on the MEMS lens based on the foregoing example. The MEMS lens scanner may be a one-dimensional lens scanner, namely, a lens scanner having a cantilever beam structure in one direction. Alternatively, the MEMS lens scanner may be a two-dimensional lens scanner, namely, a lens scanner having cantilever beam structures in two directions perpendicular to each other.

The micro LED array or the micro OLED array has M*N pixel blocks, where M≥1, N≥1, and M*N> 1. In the micro LED array or the micro OLED array, the pixel blocks are arranged and distributed with reference to the pixel arrangement distance in the liquid crystal display screen. In addition, RGB color subpixels of each pixel block may be arranged in different manners. For example, the RGB subpixels are separated on a plane, or the RGB subpixels are located in a same plane position, and are arranged in the stacked manner in sequence in the vertical direction. An arrangement manner of the subpixels is not limited in embodiments of this application.

During actual display, the MEMS lens repeatedly performs scanning along a fixed scanning track. The micro LED or the micro OLED integrated on a MEMS lens scanner performs corresponding color display in real time. In a scanning process of the MEMS lens, a plurality of image blocks are obtained one by one by properly driving the micro LED pixel array or the micro OLED pixel array. In a specific period of time, the image blocks are combined to finally form a two-dimensional display picture, namely, the projected image.

In addition, to ensure feasibility of the entire solution, an optical structure may be prepared on a surface of the micro LED pixel array or the micro OLED pixel array, to reduce the light emitting angle of the micro LED or the micro OLED as much as possible, so that the beam emitted by the micro LED or the micro OLED is featured by a narrow beam and high collimation.

When the MEMS lens performs scanning along a fixed two-dimensional scanning track, a finally formed effect is shown in FIG. 4. At the moment t1, the MEMS lens is at an angle, and the micro LED pixel array or the micro OLED pixel array is displayed in an upper left corner of a finally displayed picture. In a process in which the MEMS lens rotates along a horizontal direction at an angle, the micro LED pixel array or the micro OLED pixel array displays a picture at different positions of a to-be-displayed projected image, that is, display an image block. For example, at the moment tn, an image block is displayed at another position based on the previous image block.

In addition, when the MEMS lens rotates in a vertical direction by a specific angle, the micro LED pixel array or the micro OLED pixel array displays a picture at different vertical positions of the to-be-displayed projected image, as shown in the moment tm and the moment ts. Finally, from the moment t1 to the moment ts, an entire two-dimensional display picture may be formed, and a frame of projected image is correspondingly displayed. This process is repeated, and a plurality of frames of projected images may form a projected video or the like.

It should be noted that, for the projection apparatus with the micro LED or the micro OLED integrated on the MEMS, the two-dimensional display picture that can be formed finally is the projected image. The displayed two-dimensional picture may be analyzed, and an image processing method is optimized to obtain a more appropriate drive signal, to improve a display effect. The step may be performed during debugging of the projection apparatus. Alternatively, optimization and debugging may be performed by a built-in processor during use. This is not limited herein.

According to the projection apparatus provided in embodiments of this application, the pixel array having a light-emitting feature and the MEMS lens scanner that scans the array are driven to obtain the projected image. A high-resolution projected image can be obtained without a need of a large-sized optical module for providing a light source and without requiring the MEMS to be driven at a high speed. An image above a 1080P level can be projected under a condition that a projection apparatus is ensured to be smaller than 2 cubic centimeters. This resolves a problem in the conventional technology that high resolution requires a large-sized projection device, and a small-sized projection device projects a low-resolution projected image.

An embodiment of this application provides a projection method. FIG. 6 is a flowchart of the projection method according to this embodiment of this application. The method includes the following steps.

S101: Drive a pixel array having a light-emitting feature to perform color display.

In some examples, the pixel array may be a rectangular pixel array including a plurality of pixel blocks, for example, including M pixel blocks in each row and N pixel blocks in each column. The pixel block includes three subpixels: red, green, and blue subpixels. The subpixels have a light-emitting feature. M≥1, N≥1, and M*N>1.

S102: Control a MEMS lens to rotate on a cantilever beam and scan the color-display pixel array, to obtain a projected image.

The cantilever beam is disposed outside the pixel array and is configured to fasten the MEMS lens. The MEMS lens is configured to scan the pixel array. The cantilever beam and the MEMS lens form a MEMS lens scanner.

S101 and S102 are performed in a same timing, and there is no sequence.

In some examples, the MEMS lens scanner is a one-dimensional lens scanner. Controlling the MEMS lens to rotate on the cantilever beam and scan the color-display pixel array, to obtain the projected image includes: controlling the one-dimensional MEMS lens to rotate along the cantilever beam within a first angle and scan the color-display pixel array, to obtain first image blocks obtained through scanning by the MEMS lens at a group of sampling time points, where the first image blocks at the group of sampling points form the projected image.

In some examples, the MEMS lens scanner is a two-dimensional lens scanner. Controlling the MEMS lens to rotate on the cantilever beam and scan the color-display pixel array, to obtain the projected image includes: controlling a MEMS lens scanner in one dimension to rotate along the cantilever beam within a second angle and scan the color-display pixel array, to obtain second image blocks obtained through scanning by the MEMS lens at a group of sampling time points; and controlling a MEMS lens in the other dimension to rotate in a direction perpendicular to the cantilever beam within a third angle and scan the color-display pixel array, to obtain third image blocks obtained through scanning by the MEMS lens at another group of sampling time points, where the second image blocks and the third image blocks form the projected image.

Further, driving the pixel array having a light-emitting feature to perform color display; and controlling the MEMS lens to rotate on the cantilever beam and scan the color-display pixel array, to obtain the projected image may be: in a same timing, driving the pixel array having a light-emitting feature to perform color display, and controlling the MEMS lens to rotate on the cantilever beam and scan the color-display pixel array, to obtain the projected image. After data processing, information about a to-be-projected image may be output as two parts of drive signals. One signal is used to drive the MEMS lens to rotate and scan the color-display pixel array, to obtain the projected image, and the other signal is used to drive the pixel array to perform color display, for example, drive a micro LED array or a micro OLED array to perform color display. The two driving processes need to be performed in a same timing to ensure a display effect of the projected image.

In some examples, a scanning track of the MEMS lens is that a start end of the scanning track does not extend an utmost edge of the pixel array scanned by the MEMS lens. The scanning track of the MEMS lens is that a termination end of the scanning track does not extend the utmost edge of the pixel array scanned by the MEMS lens.

The method is applicable to image projection in the projection apparatus by using the method in the foregoing example of the projection apparatus, but is not limited to being applicable to the foregoing projection apparatus.

According to the projection apparatus and method provided in embodiments of this application, the pixel array having a light-emitting feature and the MEMS lens scanner that scans the array are driven to obtain the projected image. A high-resolution projected image can be obtained without a need of a large-sized optical module for providing a light source and without requiring the MEMS to be driven at a high speed. This enables a small-sized projection apparatus to provide a higher-resolution projected image, and achieves an objective of optimizing a size and increasing resolution.

A person skilled in the art should be aware that in the foregoing one or more examples, functions described in embodiments of this application may be implemented by hardware, software, firmware, or any combination thereof. When the functions are implemented by using the software, the functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make various forms without departing from the purposes of this application and the protection scope of the claims, and all the forms shall fall within the protection of this application.

## Claims

1. A projection apparatus (100), comprising:
a pixel array (102) disposed on a substrate (101), wherein the pixel array (102) has a light-emitting feature;
a cantilever beam (1031) disposed on the substrate (101) and configured to fasten a micro-electro-mechanical system (MEMS) lens (1032),
wherein the cantilever beam is disposed outside the pixel array, the MEMS lens (1032) is configured to scan the pixel array, and the cantilever beam and the MEMS lens form a MEMS lens scanner (103); and
a driver (104) connected to the pixel array (102) and the MEMS lens scanner (103) and configured to drive the pixel array having a light-emitting feature to perform color display, wherein
the driver (104) is further configured to control the MEMS lens to rotate on the cantilever beam and scan the color-display pixel array, to obtain a projected image.

2. The apparatus according to claim 1, wherein the MEMS lens scanner (103) is a one-dimensional lens scanner, and
the driver (104) is specifically configured to control the MEMS lens (1032) to rotate along the cantilever beam within a first angle and scan the color-display pixel array, to obtain first image blocks obtained through scanning by the MEMS lens at a group of sampling time points, wherein the first image blocks at the group of sampling points form the projected image.

3. The apparatus according to claim 1, wherein the MEMS lens scanner (103) is a two-dimensional lens scanner, and
the driver (104) is specifically configured to: control a MEMS lens (1032) in one dimension to rotate along the cantilever beam within a second angle and scan the color-display pixel array, to obtain second image blocks obtained through scanning by the MEMS lens at a group of sampling time points; and
control a MEMS lens in the other dimension to rotate in a direction perpendicular to the cantilever beam within a third angle and scan the color-display pixel array, to obtain third image blocks obtained through scanning by the MEMS lens at another group of sampling time points, wherein
the second image blocks and the third image blocks form the projected image.

4. The apparatus according to any one of claims 1 to 3, wherein the pixel array (102) comprises a plurality of pixel blocks, and the pixel block comprises: red, green, and blue subpixels that are disposed in parallel on a horizontal plane and that have a light-emitting feature, or
red, green, and blue subpixels that are disposed in a stacked manner in a vertical direction and that have a light-emitting feature.

5. The apparatus according to any one of claims 1 to 4, wherein the driver (104) is specifically configured to: in a same timing, control the MEMS lens scanner (103) to perform scanning, and drive the pixel array to perform color display.

6. The apparatus according to any one of claims 1 to 5, further comprising:
an optical structure disposed on a surface of the pixel array (102), wherein the optical structure is configured to calibrate emitted light of the pixel array to emitted light featured by a narrow beam and high collimation.

7. The apparatus according to any one of claims 1 to 6, wherein
the pixel array (102) is a micro light emitting diode, micro LED, display array or a micro organic light emitting diode, micro OLED, display array.

8. The apparatus according to any one of claims 1 to 7, wherein
a scanning track of the MEMS lens (1032) is such that a start end of the scanning track does not extend an utmost edge of the pixel array scanned by the MEMS lens.

9. A projection method, comprising:
driving a pixel array (102) having a light-emitting feature to perform color display; and
controlling a micro-electro-mechanical system (MEMS) lens (1032) to rotate on a cantilever bean (1031) and scan the color-display pixel array, to obtain a projected image, wherein the cantilever beam (1031) is disposed outside the pixel array (102) and is configured to fasten the MEMS lens (1032), the MEMS lens is configured to scan the pixel array (102), and the cantilever beam (1031) and the MEMS lens (1031) form a MEMS lens scanner (103).

10. The method according to claim 9, wherein
the MEMS lens scanner (103) is a one-dimensional lens scanner, and
the step of controlling a micro-electro-mechanical system MEMS lens (1032) to rotate on a cantilever beam (1031) and scan the color-display pixel array, to obtain a projected image comprises:
controlling the one-dimensional MEMS lens (1031) to rotate along the cantilever beam within a first angle and scan the color-display pixel array, to obtain first image blocks obtained through scanning by the MEMS lens at a group of sampling time points, wherein the first image blocks at the group of sampling points form the projected image.

11. The method according to claim 9, wherein
the MEMS lens scanner (103) is a two-dimensional lens scanner, and
the step of controlling a micro-electro-mechanical system MEMS lens to rotate on a cantilever beam and scan the color-display pixel array, to obtain a projected image comprises:
controlling a MEMS lens in one dimension to rotate along the cantilever beam within a second angle and scan the color-display pixel array, to obtain second image blocks obtained through scanning by the MEMS lens at a group of sampling time points; and
controlling a MEMS lens in the other dimension to rotate in a direction perpendicular to the cantilever beam within a third angle and scan the color-display pixel array, to obtain third image blocks obtained through scanning by the MEMS lens at another group of sampling time points, wherein
the second image blocks and the third image blocks form the projected image.

12. The method according to any one of claims 9 to 11, wherein the steps of driving a pixel array (102) having a light-emitting feature to perform color display; and controlling a micro-electro-mechanical system MEMS lens to rotate on a cantilever beam and scan the color-display pixel array, to obtain a projected image comprises:
in a same timing, driving the pixel array (102) having a light-emitting feature to perform color display, and controlling the MEMS lens to rotate on the cantilever beam and scan the color-display pixel array, to obtain the projected image.

13. The method according to any one of claims 9 to 12, wherein
a scanning track of the MEMS lens (1032) is such that a start end of the scanning track does not extend an utmost edge of the pixel array scanned by the MEMS lens.

## Patentansprüche

1. Projektionseinrichtung (100), umfassend:
ein Pixelarray (102), das auf einem Substrat (101) angeordnet ist, wobei das Pixelarray (102) ein Leuchtmerkmal aufweist;
einen Kragarm (1031), der auf dem Substrat (101) angeordnet und dazu konfiguriert ist, eine Mikrosystemlinse (MEMS-Linse) (1032) zu befestigen, wobei der Kragarm außerhalb des Pixelarrays angeordnet ist, die MEMS-Linse (1032) dazu konfiguriert ist, das Pixelarray zu scannen, und der Kragarm und die MEMS-Linse einen MEMS-Linsenscanner (103) bilden; und
einen Treiber (104), der mit dem Pixelarray (102) und dem MEMS-Linsenscanner (103) verbunden und dazu konfiguriert ist, das Pixelarray, das ein Leuchtmerkmal aufweist, anzutreiben, um eine Farbanzeige durchzuführen, wobei
der Treiber (104) ferner dazu konfiguriert ist, die MEMS-Linse zu steuern, um sich auf dem Kragarm zu drehen und das Farbanzeigepixelarray zu scannen, um ein projiziertes Bild zu erlangen.

2. Einrichtung nach Anspruch 1, wobei der MEMS-Linsenscanner (103) ein eindimensionaler Linsenscanner ist und der Treiber (104) speziell dazu konfiguriert ist, die MEMS-Linse (1032) zu steuern, um sich innerhalb eines ersten Winkels entlang des Kragarms zu drehen und das Farbanzeigepixelarray zu scannen, um erste Bilderblöcke zu erlangen, die über Scannen durch die MEMS-Linse an einer Gruppe von Abtastzeitpunkten erlangt werden, wobei die ersten Bilderblöcke an der Gruppe von Abtastpunkten das projizierte Bild bilden.

3. Einrichtung nach Anspruch 1, wobei der MEMS-Linsenscanner (103) ein zweidimensionaler Linsenscanner ist und der Treiber (104) speziell zu Folgendem konfiguriert ist: Steuern einer MEMS-Linse (1032) in einer Dimension, um sich innerhalb eines zweiten Winkels entlang des Kragarms zu drehen und das Farbanzeigepixelarray zu scannen, um zweite Bilderblöcke zu erlangen, die über Scannen durch die MEMS-Linse an einer Gruppe von Abtastzeitpunkten erlangt werden; und
Steuern einer MEMS-Linse in der anderen Dimension, um sich innerhalb eines dritten Winkels in einer Richtung zu drehen, die senkrecht zu dem Kragarm ist, und das Farbanzeigepixelarray zu scannen, um dritte Bilderblöcke zu erlangen, die über Scannen durch die MEMS-Linse an einer anderen Gruppe von Abtastzeitpunkten erlangt werden, wobei
die zweiten Bilderblöcke und die dritten Bilderblöcke das projizierte Bild bilden.

4. Einrichtung nach einem der Ansprüche 1 bis 3, wobei das Pixelarray (102) eine Vielzahl von Pixelblöcken umfasst und der Pixelblock Folgendes umfasst: rote, grüne und blaue Teilpixel, die parallel auf einer horizontalen Ebene angeordnet sind und die ein Leuchtmerkmal aufweisen, oder
rote, grüne und blaue Teilpixel, die in einer gestapelten Weise in einer vertikalen Richtung angeordnet sind und die ein Leuchtmerkmal aufweisen.

5. Einrichtung nach einem der Ansprüche 1 bis 4, wobei der Treiber (104) speziell zu Folgendem konfiguriert ist: in einer gleichen Zeitplanung Steuern des MEMS-Linsenscanners (103), um das Scannen durchzuführen, und Antreiben des Pixelarrays, um die Farbanzeige durchzuführen.

6. Einrichtung nach einem der Ansprüche 1 bis 5, ferner umfassend:
eine optische Struktur, die auf einer Oberfläche des Pixelarrays (102) angeordnet ist, wobei die optische Struktur dazu konfiguriert ist, emittiertes Licht des Pixelarrays auf emittiertes Licht zu kalibrieren, dessen Merkmale ein schmaler Strahl und eine hohe Kollimation sind.

7. Einrichtung nach einem der Ansprüche 1 bis 6, wobei das Pixelarray (102) ein Anzeigearray mit Mikroleuchtdioden, Mikro-LED-Anzeigearray, oder ein Anzeigearray mit organischen Mikroleuchtdioden, Mikro-OLED-Anzeigearray, ist.

8. Einrichtung nach einem der Ansprüche 1 bis 7, wobei eine Scanspur der MEMS-Linse (1032) derart ist, dass ein Startende der Scanspur eine äußere Kante des Pixelarrays, das durch die MEMS-Linse gescannt wird, nicht erweitert.

9. Projektionsverfahren, umfassend:
Antreiben eines Pixelarrays (102), das ein Leuchtmerkmal aufweist, um eine Farbanzeige durchzuführen; und
Steuern einer Mikrosystemlinse (MEMS-Linse) (1032), um sich auf einem Kragarm (1031) zu drehen und das Farbanzeigepixelarray zu scannen, um ein projiziertes Bild zu erlangen, wobei der Kragarm (1031) außerhalb des Pixelarrays (102) angeordnet und dazu konfiguriert ist, die MEMS-Linse (1032) zu befestigen, die MEMS-Linse dazu konfiguriert ist, das Pixelarray (102) zu scannen, und der Kragarm (1031) und die MEMS-Linse (1031) einen MEMS-Linsenscanner (103) bilden.

10. Verfahren nach Anspruch 9, wobei der MEMS-Linsenscanner (103) ein eindimensionaler Linsenscanner ist und der Schritt des Steuerns einer Mikrosystemlinse, MEMS-Linse (1032), um sich auf einem Kragarm (1031) zu drehen und das Farbanzeigepixelarray zu scannen, um ein projiziertes Bild zu erlangen, Folgendes umfasst:
Steuern der eindimensionalen MEMS-Linse (1031), um sich innerhalb eines ersten Winkels entlang des Kragarms zu drehen und das Farbanzeigepixelarray zu scannen, um erste Bilderblöcke zu erlangen, die über Scannen durch die MEMS-Linse an einer Gruppe von Abtastzeitpunkten erlangt werden, wobei die ersten Bilderblöcke an der Gruppe von Abtastpunkten das projizierte Bild bilden.

11. Verfahren nach Anspruch 9, wobei der MEMS-Linsenscanner (103) ein zweidimensionaler Linsenscanner ist und der Schritt des Steuerns einer Mikrosystemlinse, MEMS-Linse, um sich auf einem Kragarm zu drehen und das Farbanzeigepixelarray zu scannen, um ein projiziertes Bild zu erlangen, Folgendes umfasst:
Steuern einer MEMS-Linse in einer Dimension, um sich innerhalb eines zweiten Winkels entlang des Kragarms zu drehen und das Farbanzeigepixelarray zu scannen, um zweite Bilderblöcke zu erlangen, die über Scannen durch die MEMS-Linse an einer Gruppe von Abtastzeitpunkten erlangt werden; und
Steuern einer MEMS-Linse in der anderen Dimension, um sich innerhalb eines dritten Winkels in einer Richtung zu drehen, die senkrecht zu dem Kragarm ist, und das Farbanzeigepixelarray zu scannen, um dritte Bilderblöcke zu erlangen, die über Scannen durch die MEMS-Linse an einer anderen Gruppe von Abtastzeitpunkten erlangt werden, wobei
die zweiten Bilderblöcke und die dritten Bilderblöcke das projizierte Bild bilden.

12. Verfahren nach einem der Ansprüche 9 bis 11, wobei die Schritte des Antreibens eines Pixelarrays (102), das ein Leuchtmerkmal aufweist, um eine Farbanzeige durchzuführen; und Steuerns einer Mikrosystemlinse, MEMS-Linse, um sich auf einem Kragarm zu drehen und das Farbanzeigepixelarray zu scannen, um ein projiziertes Bild zu erlangen, Folgendes umfasst:
in einer gleichen Zeitplanung Antreiben des Pixelarrays (102), das ein Leuchtmerkmal aufweist, um die Farbanzeige durchzuführen, und Steuern der MEMS-Linse, um sich auf dem Kragarm zu drehen und das Farbanzeigepixelarray zu scannen, um das projizierte Bild zu erlangen.

13. Verfahren nach einem der Ansprüche 9 bis 12, wobei eine Scanspur der MEMS-Linse (1032) derart ist, dass ein Startende der Scanspur eine äußere Kante des Pixelarrays, das durch die MEMS-Linse gescannt wird, nicht erweitert.

## Revendications

1. Appareil de projection (100) comprenant :
un réseau de pixels (102) disposé sur un substrat (101), dans lequel le réseau de pixels (102) a une fonction d'émission de lumière ;
une poutre en porte-à-faux (1031) disposée sur le substrat (101) et configurée pour fixer une lentille micro-électro-mécanique (MEMS) (1032), dans lequel la poutre en porte-à-faux est disposée à l'extérieur du réseau de pixels, la lentille MEMS (1032) est configurée pour balayer le réseau de pixels, et la poutre en porte-à-faux et la lentille MEMS forment un scanner de lentille MEMS (103) ; et
un pilote (104) connecté au réseau de pixels (102) et au scanner de lentille MEMS (103) et configuré pour piloter le réseau de pixels ayant une fonction d'émission de lumière pour réaliser un affichage couleur, dans lequel le pilote (104) est également configuré pour commander la lentille MEMS pour tourner sur la poutre en porte-à-faux et balayer le réseau de pixels d'affichage couleur, pour obtenir une image projetée.

2. Appareil selon la revendication 1, dans lequel le scanner de lentille MEMS (103) est un scanner de lentille unidimensionnel, et le pilote (104) est spécifiquement configuré pour commander la lentille MEMS (1032) pour tourner le long de la poutre en porte-à-faux dans un premier angle et balayer le réseau de pixels d'affichage couleur, pour obtenir des premiers blocs d'image obtenus par balayage par la lentille MEMS à un groupe de points temporels d'échantillonnage, dans lequel les premiers blocs d'image au groupe de points d'échantillonnage forment l'image projetée.

3. Appareil selon la revendication 1, dans lequel le scanner à lentille MEMS (103) est un scanner à lentille bidimensionnel, et le pilote (104) est spécifiquement configuré pour : commander une lentille MEMS (1032) dans une dimension pour tourner le long de la poutre en porte-à-faux selon un deuxième angle et balayer le réseau de pixels d'affichage couleur, pour obtenir les deuxièmes blocs d'image obtenus par balayage par la lentille MEMS à un groupe de points temporels d'échantillonnage ; et
commander une lentille MEMS dans l'autre dimension pour tourner dans une direction perpendiculaire à la poutre en porte-à-faux selon un troisième angle et balayer le réseau de pixels d'affichage couleur, pour obtenir les troisièmes blocs d'image obtenus par balayage par la lentille MEMS à un autre groupe de points temporels d'échantillonnage, dans lequel
les deuxièmes blocs d'image et les troisièmes blocs d'image forment l'image projetée.

4. Appareil selon l'une quelconque des revendications 1 à 3, dans lequel le réseau de pixels (102) comprend une pluralité de blocs de pixels, et le bloc de pixels comprend : des sous-pixels rouges, verts et bleus disposés en parallèle sur un plan horizontal et ayant une fonction d'émission de lumière, ou
des sous-pixels rouges, verts et bleus disposés de manière empilée dans une direction verticale et ayant une fonction d'émission de lumière.

5. Appareil selon l'une quelconque des revendications 1 à 4, dans lequel le pilote (104) est spécifiquement configuré pour : dans le même temps, commander le scanner de lentille MEMS (103) pour réaliser le balayage et piloter le réseau de pixels pour réaliser l'affichage couleur.

6. Appareil selon l'une quelconque des revendications 1 à 5, comprenant également :
une structure optique disposée sur une surface du réseau de pixels (102),
dans lequel la structure optique est configurée pour calibrer la lumière émise par le réseau de pixels en une lumière émise **caractérisée par** un faisceau étroit et une collimation élevée.

7. Appareil selon l'une quelconque des revendications 1 à 6, dans lequel le réseau de pixels (102) est un réseau d'affichage à micro diode électroluminescente, micro LED ou un réseau d'affichage à micro diode électroluminescente organique, micro OLED.

8. Appareil selon l'une quelconque des revendications 1 à 7, dans lequel une piste de balayage de la lentille MEMS (1032) est telle qu'une extrémité de départ de la piste de balayage ne se prolonge pas jusqu'au bord le plus extrême du réseau de pixels balayé par la lentille MEMS.

9. Procédé de projection, comprenant :
le pilotage d'un réseau de pixels (102) ayant une fonction d'émission de lumière pour réaliser un affichage couleur ; et
la commande d'une lentille de système micro-électro-mécanique (MEMS) (1032) pour tourner sur une poutre en porte-à-faux (1031) et balayer le réseau de pixels d'affichage couleur, pour obtenir une image projetée, dans lequel la poutre en porte-à-faux (1031) est disposée à l'extérieur du réseau de pixels (102) et est configurée pour fixer la lentille MEMS (1032), la lentille MEMS est configurée pour balayer le réseau de pixels (102), et la poutre en porte-à-faux (1031) et la lentille MEMS (1031) forment un scanner de lentille MEMS (103).

10. Procédé selon la revendication 9, dans lequel le scanner de lentille MEMS (103) est un scanner de lentille unidimensionnel, et
l'étape de commande d'une lentille de système micro-électro-mécanique (MEMS) (1032) pour tourner sur une poutre en porte-à-faux (1031) et balayer le réseau de pixels d'affichage couleur, pour obtenir une image projetée, comprend :
la commande de la lentille MEMS unidimensionnelle (1031) pour tourner le long de la poutre en porte-à-faux selon un premier angle et balayer le réseau de pixels d'affichage couleur, pour obtenir les premiers blocs d'image obtenus par balayage par la lentille MEMS à un groupe de points temporels d'échantillonnage, dans lequel les premiers blocs d'image au groupe de points d'échantillonnage forment l'image projetée.

11. Procédé selon la revendication 9, dans lequel
le scanner de lentille MEMS (103) est un scanner de lentille bidimensionnel, et l'étape de commande d'une lentille de système micro-électro-mécanique MEMS pour tourner sur une poutre en porte-à-faux et balayer le réseau de pixels d'affichage couleur, pour obtenir une image projetée, comprend :
la commande d'une lentille MEMS dans une dimension pour tourner le long de la poutre en porte-à-faux selon un deuxième angle et balayer le réseau de pixels d'affichage couleur, pour obtenir les deuxièmes blocs d'image obtenus par balayage par la lentille MEMS à un groupe de points temporels d'échantillonnage ; et
la commande d'une lentille MEMS dans l'autre dimension pour tourner dans une direction perpendiculaire à la poutre en porte-à-faux selon un troisième angle et balayer le réseau de pixels d'affichage couleur, pour obtenir les troisièmes blocs d'image obtenus par balayage par la lentille MEMS à un autre groupe de points temporels d'échantillonnage, dans lequel
les deuxièmes blocs d'image et les troisièmes blocs d'image forment l'image projetée.

12. Procédé selon l'une quelconque des revendications 9 à 11, dans lequel les étapes de pilotage d'un réseau de pixels (102) ayant une fonction d'émission de lumière pour réaliser un affichage couleur ; et la commande d'une lentille de système micro-électro-mécanique (MEMS) pour tourner sur une poutre en porte-à-faux et balayer le réseau de pixels d'affichage couleur, afin d'obtenir une image projetée, comprennent :
en même temps, le pilotage du réseau de pixels (102) ayant une fonction d'émission de lumière pour réaliser un affichage couleur, et la commande de la lentille MEMS pour tourner sur la poutre en porte-à-faux et balayer le réseau de pixels d'affichage couleur, pour obtenir l'image projetée.

13. Procédé selon l'une quelconque des revendications 9 à 12, dans lequel
une piste de balayage de la lentille MEMS (1032) est telle qu'une extrémité de départ de la piste de balayage ne se prolonge pas jusqu'au bord le plus extrême du réseau de pixels balayé par la lentille MEMS.
